# EUROPEAN PATENT APPLICATION

(11) **EP 4 792 696 A1**
(43) Date of publication of application: **19.08.2026**
(21) Application number: 26155867.0
(22) Date of filing: 02.02.2026
(51) Int. Cl.: A47J 37/06, H02P 7/29

(54) **NOISE REDUCTION CONTROL METHOD FOR AIR FRYER, AND APPARATUS, STORAGE MEDIUM, AND ELECTRONIC DEVICE USING THE SAME**

(30) Priority: 18.02.2025 CN 202510180570
(71) Applicant: Shenzhen Chenbei Technology Co., Ltd., Shenzhen, Guangdong 518000 (CN)
(72) Inventor: XU, Zecan, SHENZHEN, 518000 (CN)
(74) Representative: Bayramoglu et al.

(57) **Abstract**

The present disclosure provides a noise reduction control method for an air fryer, and an apparatus, a storage medium and an electronic device using the same, and relates to the technical field of noise control. The noise reduction control method for the air fryer includes: acquiring a target cooking mode of the air fryer; determining a target cooking rotational speed of a direct current (DC) motor of the air fryer according to the target cooking mode; and if the target cooking rotational speed is greater than a minimum rotational speed of the DC motor during a soft start, controlling the DC motor to implement the soft start to gradually reach the target cooking rotational speed. The present disclosure can control noise of the air fryer to enhance the user experience, and can further improve the cooking efficiency.

## Description

### TECHNICAL FIELD

The present disclosure relates to the technical field of noise control, and in particular to a noise reduction control method for an air fryer, and an apparatus, a storage medium and an electronic device using the same.

### BACKGROUND TECHNOLOGY

Air fryers are one of the most popular kitchen appliances in recent years. They use high-speed circulating hot air to cook food, delivering a crispy exterior and tender interior with a texture and appearance similar to those of deep-fried food.

At present, the air fryers typically use a shaded-pole motor. However, the shaded-pole motor only has a fixed-gear rotational speed and reaches a target rotational speed directly upon being started. When the target rotational speed is too high, starting the shaded-pole motor will generate loud noise, creating a sharp contrast with the state before cooking is activated, and thus affecting user experience. In addition, since the air fryer is at a relatively low temperature when it is first started, the high rotational speed of the shaded-pole motor results in rapid heat loss from the air fryer, thereby affecting cooking efficiency.

### CONTENT OF THE INVENTION

In view of this, the present disclosure provides a noise reduction control method for an air fryer, and an apparatus, a storage medium and an electronic device using the same. The present disclosure can control noise of the air fryer to enhance the user experience, and can further improve the cooking efficiency.

A first aspect of the present disclosure provides a noise reduction control method for an air fryer, where the air fryer includes a direct current (DC) motor, and the noise reduction control method for an air fryer includes:

acquiring a target cooking mode of the air fryer;
determining a target cooking rotational speed of the DC motor of the air fryer according to the target cooking mode; and
if the target cooking rotational speed is greater than a minimum rotational speed of the DC motor during a soft start, controlling the DC motor to implement the soft start to gradually reach the target cooking rotational speed.

A second aspect of the present disclosure provides a noise reduction control apparatus for an air fryer, including:
an acquisition unit that is configured to acquire a target cooking mode of the air fryer;
a determination unit that is configured to determine a target cooking rotational speed of a DC motor of the air fryer according to the target cooking mode; and
a control unit that is configured to control, if the target cooking rotational speed is greater than a minimum rotational speed of the DC motor during a soft start, the DC motor to implement the soft start to gradually reach the target cooking rotational speed.

A third aspect of the present disclosure provides a storage medium, where the storage medium is configured to store a computer program, and the computer program is executed by a processor to implement the above noise reduction control method for an air fryer.

A fourth aspect of the present disclosure provides an air fryer, including a storage medium, a processor, and a computer program stored in the storage medium and executable on the processor, where the processor is configured to execute the computer program to implement the above noise reduction control method for an air fryer.

With the above technical solutions, compared with the prior art, the noise reduction control method for an air fryer, and the apparatus, the storage medium, and the electronic device using the same provided by the present disclosure can determine the target cooking rotational speed of the DC motor of the air fryer according to the target cooking mode, and control, if the target cooking rotational speed is greater than the minimum rotational speed of the DC motor during the soft start, the DC motor to implement the soft start to gradually reach the target cooking rotational speed. Thus, by employing the DC motor, the present disclosure can slowly increase the rotational speed of the motor when the air fryer is just started for cooking, such that noise of the motor in rotation becomes gradually loud, providing the user with a gradual adaptation process and thereby improving user experience. In addition, for a high target cooking rotational speed, when the air fryer is started, the present disclosure can reduce heat loss during the heating process by slowly increasing the rotational speed of the motor, thereby improving cooking efficiency.

The above description is merely a summary of the technical solutions of the present disclosure. In order to allow the technical means of the present disclosure to be understood clearly and implemented in accordance with the content of the specification and allow the above and other objectives, features, and advantages of the present disclosure to be obviously and easily understood, specific implementations of the present disclosure are described below.

### DESCRIPTION OF THE DRAWINGS

The accompanying drawings described herein are provided for further understanding of the present disclosure, and constitute a part of the present disclosure. The exemplary embodiments of the present disclosure and illustrations thereof are intended to explain the present disclosure, but do not constitute inappropriate limitations to the present disclosure. In the drawings:
FIG. 1 shows a schematic flowchart of a noise reduction control method for an air fryer;
FIG. 2 shows a schematic diagram of a relationship between a rotational speed and a duty cycle of a motor;
FIG. 3 shows a schematic flowchart of a soft start control method of a DC motor;
FIG. 4 shows a schematic overall flowchart of a noise reduction control method for an air fryer;
FIG. 5 shows a schematic control flowchart of a heating tube and a fan; and
FIG. 6 shows a schematic structural view of a noise reduction control apparatus for an air fryer.

### SPECIFIC IMPLEMENTATIONS

The present disclosure will be described in detail below with reference to the drawings and embodiments. It should be noted that the embodiments in the present disclosure and features in the embodiments may be combined with each other in a non-conflicting situation.

The shaded-pole motor only has a fixed-gear rotational speed and reaches a target rotational speed directly upon being started. When the target rotational speed is too high, starting the shaded-pole motor will generate loud noise, creating a sharp contrast before cooking is activated and thus affecting user experience. In addition, since the air fryer has a relatively low temperature when just started, the high rotational speed of the shaded-pole motor results in rapid heat loss of the air fryer, thereby affecting cooking efficiency.

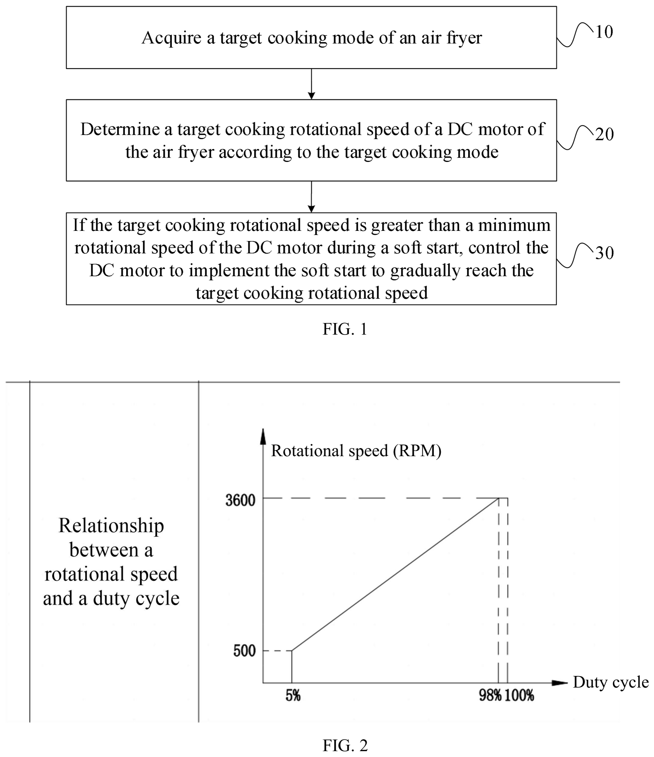

In order to solve the above problem, an embodiment of the present disclosure provides a noise reduction control method for an air fryer. The air fryer includes a DC motor. As shown in FIG. 1, the noise reduction control method for an air fryer includes:
Step 10: A target cooking mode of the air fryer is acquired.
The target cooking mode is any cooking mode in a plurality of cooking modes. The plurality of cooking modes of the air fryer include a fruit drying mode, an air drying mode, a fermentation mode, etc. It is to be noted that the cooking mode in the embodiment of the present disclosure may further be other cooking modes and is not limited to the above enumerations.

In the embodiment of the present disclosure, any cooking mode, i.e., the target cooking mode, may be selected by the user through a display or a button of the air fryer. The control unit of the air fryer may acquire the target cooking mode selected by the user.

Step 20: A target cooking rotational speed of the DC motor of the air fryer is determined according to the target cooking mode.

The DC motor has different cooking rotational speeds in different cooking modes.

In the embodiment of the present disclosure, according to cooking characteristics of the different cooking modes, appropriate rotational speeds of the DC motor in the different cooking modes can be preset to generate a preset cooking mode list. The preset cooking mode list records the cooking rotational speeds of the DC motor in the different cooking modes, thereby improving cooking effect for corresponding food. After the target cooking mode selected by the user is acquired, the preset cooking mode list can be queried, the target cooking rotational speed of the DC motor in the target cooking mode can be determined according to the target cooking mode, and operation of the DC motor is controlled according to the target cooking rotational speed.

The DC motor in the embodiment of the present disclosure may be controlled by a duty cycle of a Pulse Width Modulation (PWM) signal, where the duty cycle is denoted as pwm. Different rotational speeds of the motor are achieved by outputting different duty cycles pwm. FIG. 2 shows a relationship between the rotational speed and the duty cycle pwm of the DC motor. When the duty cycle is 5%, the rotational speed of the DC motor is 500 rpm. When the duty cycle is 98%, the rotational speed of the DC motor is 3,600 rpm. The rotational speed of the DC motor gradually increases as the duty cycle increases, and there is a linear correlation between the duty cycle and the rotational speed of the DC motor.

It is to be noted that besides the duty cycle, the rotational speed of the DC motor may further be controlled by other methods, such as a voltage and a current. The method for controlling the rotational speed of the DC motor is not specifically limited in the embodiment of the present disclosure.

Step 30: If the target cooking rotational speed is greater than a minimum rotational speed of the DC motor during a soft start, the DC motor is controlled to implement the soft start to gradually reach the target cooking rotational speed.

The soft start refers to a process in which the DC motor gradually reaches the target cooking rotational speed from an initial rotational speed. The minimum rotational speed of the DC motor during the soft start can be set according to actual business requirements, and is not specifically limited by the embodiment of the present disclosure.

To avoid excessive noise when the DC motor is started, whether the DC motor of the air fryer needs to implement the soft start is determined first based on the target cooking rotational speed in the embodiment of the present disclosure. Specifically, whether the target cooking rotational speed is greater than the minimum rotational speed of the DC motor during the soft start is determined. If the target cooking rotational speed is greater than the minimum rotational speed of the DC motor during the soft start, it indicates that the target cooking rotational speed is too high. At this time, directly controlling the DC motor to reach the target cooking rotational speed will cause the excessive noise. Therefore, it is necessary to control the DC motor to implement the soft start in a present cooking process to gradually reach the target cooking rotational speed. Conversely, if the target cooking rotational speed is less than or equal to the minimum rotational speed during the soft start, it indicates that the target cooking rotational speed is not high, and the DC motor does not need to implement the soft start in the present cooking process. That is, a duty cycle corresponding to the target cooking rotational speed may be directly output, and the DC motor is controlled to reach the target cooking rotational speed. Since the rotational speed of the DC motor is not high, the excessive noise will not be generated.

In the embodiment of the present disclosure, by determining whether the DC motor needs to implement the soft start in the present cooking process based on the target cooking rotational speed, not only can loud noise generated when the rotational speed of the DC motor is too high be prevented, but also the DC motor can be directly controlled to reach the target cooking rotational speed when the rotational speed of the DC motor is low, thereby improving cooking efficiency of the air fryer.

For example, the minimum rotational speed of the DC motor during the soft start is 1,500 rpm. When the target cooking rotational speed is 2,200 rpm that is greater than 1,500 rpm, it is determined that the DC motor needs to implement the soft start in the present cooking process. When the target cooking rotational speed is 1,000 rpm that is less than 1,500 rpm, it is determined that the DC motor does not need to implement the soft start in the present cooking process. At this time, directly starting the DC motor generates very little noise.

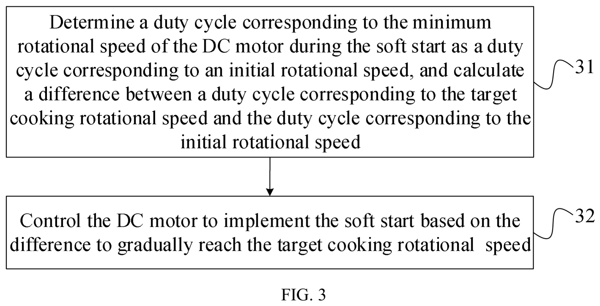

Further, upon determination that the DC motor needs to implement the soft start, the DC motor is gradually controlled to reach the target cooking rotational speed. As shown in FIG. 3, this process includes:

Step 31: A duty cycle corresponding to the minimum rotational speed of the DC motor during the soft start is determined as a duty cycle corresponding to the initial rotational speed, and a difference between the duty cycle corresponding to the target cooking rotational speed and the duty cycle corresponding to the initial rotational speed is calculated.

In the embodiment of the present disclosure, upon the determination that the DC motor needs to implement the soft start, the duty cycle corresponding to the minimum rotational speed of the DC motor is determined as the duty cycle corresponding to the initial rotational speed, and the difference pwm3 between the duty cycle pwm2 corresponding to the target cooking rotational speed and the duty cycle pwm1 corresponding to the initial rotational speed is calculated: $pwm 3 = pwm 2 - pwm 1$

Step 32: The DC motor is controlled to implement the soft start based on the difference to gradually reach the target cooking rotational speed.

In the embodiment of the present disclosure, after the difference pwm3 is calculated, the difference pwm3 is uniformly distributed over soft start period T to gradually control the rotational speed of the DC motor to the target cooking rotational speed. This process includes: Based on the difference and the soft start period, an average duty cycle increment within the soft start period is calculated. The duty cycle corresponding to the initial rotational speed is taken as a present output duty cycle to control the DC motor to reach the initial rotational speed. Whether the present output duty cycle is equal to the duty cycle corresponding to the target cooking rotational speed is determined. If the present output duty cycle is not equal to the duty cycle corresponding to the target cooking rotational speed, the present output duty cycle is increased according to the average duty cycle increment. Steps of determining and increasing the present output duty cycle are repeated until the present output duty cycle is equal to the duty cycle corresponding to the target cooking rotational speed.

The soft start period refers to time required by the DC motor to reach the target cooking rotational speed from the initial rotational speed. It can be set according to actual business requirements, and is not specifically limited in the embodiment of the present disclosure.

Specifically, the calculated difference pwm3 is divided by the soft start period T to obtain the average duty cycle increment Δpwm within the soft start period, and a specific formula is given by:$Δ pwm = pwm 3 / T$

The duty cycle pwm1 corresponding to the initial rotational speed is taken as the present output duty cycle pwm4 to control the DC motor to reach the initial rotational speed. According to the present output duty cycle pwm4 and the duty cycle pwm2 corresponding to the target cooking rotational speed, whether the present output duty cycle pwm4 is equal to the duty cycle pwm2 corresponding to the target cooking rotational speed is determined. If the present output duty cycle is not equal to the duty cycle corresponding to the target cooking rotational speed, the present output duty cycle is increased according to the average duty cycle increment Δpwm.

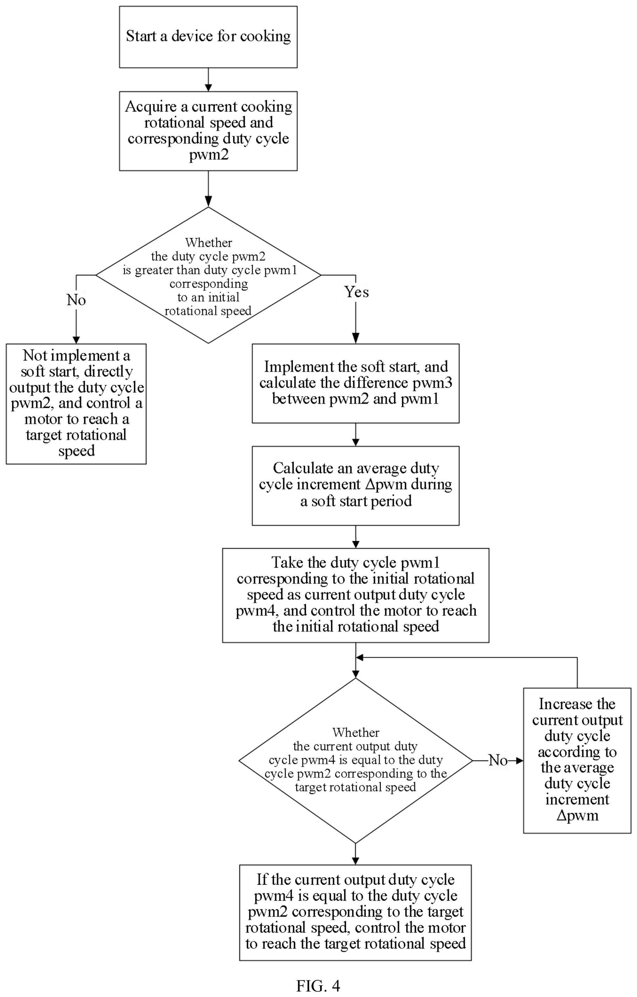

As shown in FIG. 4, on the basis of the present output duty cycle, the duty cycle of the DC motor is increased according to the average duty cycle increment Δpwm per second until the present output duty cycle reaches the duty cycle pwm2 corresponding to the target cooking rotational speed, and the DC motor reaches the target cooking rotational speed. After reaching the target cooking rotational speed, the DC motor is maintained at the stable speed in the present cooking process.

For example, the target cooking rotational speed is 3,000 rpm, the duty cycle pwm2 corresponding to the target cooking rotational speed is 70%, the minimum rotational speed during the soft start is 2,200 rpm, and the duty cycle corresponding to the minimum rotational speed during the soft start is 40%. Since the duty cycle corresponding to the target cooking rotational speed is greater than the duty cycle corresponding to the minimum rotational speed during the soft start, it is determined that the soft start needs to be implemented in the present cooking process. Then, the duty cycle corresponding to the minimum rotational speed during the soft start is determined as the duty cycle corresponding to the initial rotational speed, and the difference pwm3 between the duty cycle pwm2 corresponding to the target cooking rotational speed and the duty cycle pwm1 corresponding to the initial rotational speed is calculated, i.e., pwm3=70%-40%=30%. Next, the difference pwm3 is uniformly distributed over the soft start period T to obtain the average duty cycle increment Δpwm. Assuming that the soft start period T is 10 s, Δpwm=30%/10=3%. Further, the duty cycle of the DC motor is increased according to the Δpwm per second during the soft start period. That is, from the duty cycle corresponding to the initial rotational speed, 3% is increased per second. Until the duty cycle pwm2 (70%) corresponding to the target cooking rotational speed is reached, the stable target cooking rotational speed is maintained.

Thus, by employing the DC motor, the embodiment of the present disclosure can slowly increase the rotational speed of the motor when the air fryer is just started for cooking, such that noise of the motor in rotation becomes gradually loud, providing the user with a gradual adaptation process and thereby improving user experience. In addition, for a high target cooking rotational speed, when the air fryer is started, the embodiment of the present disclosure can reduce heat loss during the heating process by slowly increasing the rotational speed of the motor, thereby improving cooking efficiency.

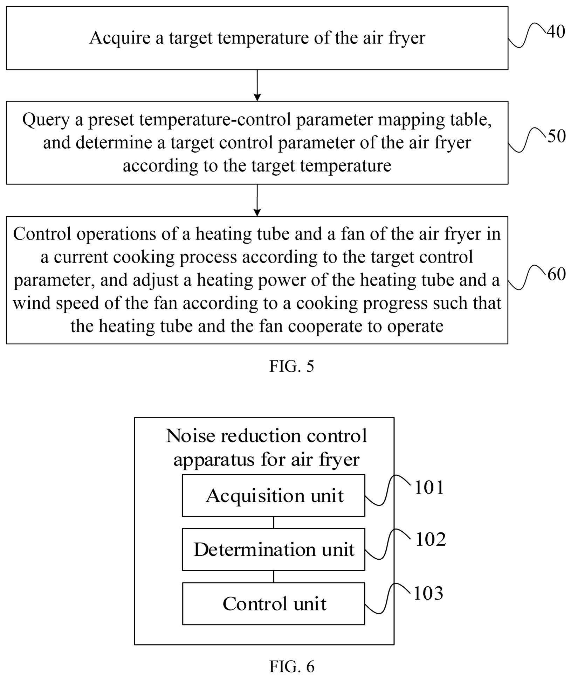

In some embodiments, a heating tube and a fan may further be controlled in the cooking process. As shown in FIG. 5, this process includes:
Step 40: A target temperature of the air fryer is acquired.

The target temperature is a cooking temperature set by the user based on a food material.

In the embodiment of the present disclosure, the cooking temperature of the food material, i.e., the target temperature, may be set directly by the user through the display or the button of the air fryer. The control unit of the air fryer may acquire the target temperature set by the user.

Step 50: A preset temperature-control parameter mapping table is queried, and a target control parameter of the air fryer is determined according to the target temperature.

The preset temperature-control parameter mapping table records a mapping relationship between different temperature ranges and different control parameters. The control parameter includes operating durations respectively required for the heating tube and the fan within the different temperature ranges. It is to be noted that the control parameter may further include other control parameters, and is not limited to the operating durations respectively required for the heating tube and the fan.

In the embodiment of the present disclosure, since control parameters of different devices vary significantly, it is necessary to preliminarily debug the control parameters of the air fryer within the different temperature ranges, thereby establishing the preset temperature-control parameter mapping table. When the target control parameter is determined, a temperature range of the target temperature is determined from the different temperature ranges. The preset temperature-control parameter mapping table is queried. According to the temperature range of the target temperature, operating durations respectively required for the heating tube and the fan to reach the target temperature are determined.

For example, in the preset temperature-control parameter mapping table, for the temperature range from 100°C to 110°C, the operating durations respectively required for the heating tube and the fan are a and b. For the temperature range from 110°C to 120°C, the operating durations respectively required for the heating tube and the fan are c and d. For the temperature range from 120°C to 130°C, the operating durations respectively required for the heating tube and the fan are e and f. Thus, it can be determined that the target temperature of 115°C belongs to the temperature range from 110°C to 120°C. To reach 115°C, the operating durations respectively required for the heating tube and the fan are the c and the d.

Step 60: Operations of the heating tube and the fan of the air fryer are controlled in the present cooking process according to the target control parameter, and a heating power of the heating tube and a wind speed of the fan are adjusted according to a cooking progress such that the heating tube and the fan cooperate to operate.

The cooking progress includes a preheating stage, a constant-temperature stage, and a crisping stage. According to the cooking progress, the soft start process of the DC motor belongs to the preheating stage.

In the embodiment of the present disclosure, in the preheating stage, the DC motor is controlled to implement the soft start to slowly increase the wind speed of the fan, reduce heat loss of the air fryer in the preheating stage, and ensure full-power heating of the heating tube. In the constant-temperature stage, a real-time temperature of the air fryer is compared with the target temperature to adjust a duty cycle of the heating tube and control the fan to operate at a gear speed matched with the target cooking mode. The real-time temperature can be measured by a negative temperature coefficient (NTC) component. Gear speeds of the fan in different cooking modes are different. In the crisping stage, when a preset crisping temperature of the food material is reached, the heating tube is turned off, and the fan is maintained to operate at the gear speed. That is, upon completion of cooking, the heating tube is turned off, the fan is kept to operate at a high speed, and moisture in the food material is volatilized with afterheat. The food material enters a temperature recovery stage when reaching the preset crisping temperature. Crisping temperatures corresponding to different food materials are different, and the crisping temperature of the corresponding food material can be selected by the user.

The embodiment of the present disclosure can improve the cooking effect by controlling the heating tube and the fan to operate cooperatively. In addition, the embodiment of the present disclosure sets appropriate heating powers and appropriate speeds of the fan according to different cooking stages and different characteristics of food materials, which can further improve the cooking effect, and meet the individualized requirements of the user.

By employing the DC motor, the noise reduction control method for an air fryer provided by the embodiment of the present disclosure can slowly increase the rotational speed of the motor when the air fryer is just started for cooking, such that noise of the motor in rotation becomes gradually loud, providing the user with a gradual adaptation process and thereby improving user experience. In addition, for a high target cooking rotational speed, when the air fryer is started, the present disclosure can reduce heat loss during the heating process by slowly increasing the rotational speed of the motor, thereby improving cooking efficiency.

Further, as a specific implementation of the method shown in FIG. 1, FIG. 3, and FIG. 5, an embodiment provides a noise reduction control apparatus for an air fryer. As shown in FIG. 6, the noise reduction control apparatus for an air fryer includes: acquisition unit 101, determination unit 102, and control unit 103.

The acquisition unit 101 may be configured to acquire a target cooking mode of the air fryer.

The determination unit 102 may be configured to determine a target cooking rotational speed of a DC motor of the air fryer according to the target cooking mode.

The control unit 103 may be configured to control, if the target cooking rotational speed is greater than a minimum rotational speed of the DC motor during a soft start, the DC motor to implement the soft start to gradually reach the target cooking rotational speed.

In some embodiments, the determination unit 102 may be configured to query a preset cooking mode list, and determine the target cooking rotational speed of the DC motor according to the target cooking mode. The preset cooking mode list records cooking rotational speeds of the DC motor in different cooking modes.

In some embodiments, the control unit 103 may further be configured to determine, if the target cooking rotational speed is less than or equal to the minimum rotational speed of the DC motor during the soft start, that the DC motor does not need to implement the soft start in a present cooking process; and directly output a duty cycle corresponding to the target cooking rotational speed, and control the DC motor to reach the target cooking rotational speed.

In some embodiments, the control unit 103 includes: a calculation module and a control module.

The calculation module may be configured to determine a duty cycle corresponding to the minimum rotational speed of the DC motor during the soft start as a duty cycle corresponding to an initial rotational speed, and calculate a difference between the duty cycle corresponding to the target cooking rotational speed and the duty cycle corresponding to the initial rotational speed.

The control module may be configured to control the DC motor to implement the soft start based on the difference to gradually reach the target cooking rotational speed.

In some embodiments, the control module may be specifically configured to calculate, based on the difference and a soft start period, an average duty cycle increment within the soft start period; take the duty cycle corresponding to the initial rotational speed as a present output duty cycle to control the DC motor to reach the initial rotational speed; determine whether the present output duty cycle is equal to the duty cycle corresponding to the target cooking rotational speed; increase, if the present output duty cycle is not equal to the duty cycle corresponding to the target cooking rotational speed, the present output duty cycle according to the average duty cycle increment; and repeat steps of determining and increasing the present output duty cycle until the present output duty cycle is equal to the duty cycle corresponding to the target cooking rotational speed.

In some embodiments, the acquisition unit 101 may further be configured to acquire a target temperature of the air fryer.

The determination unit 102 may further be configured to query a preset temperature-control parameter mapping table, and determine a target control parameter of the air fryer according to the target temperature.

The control unit 103 may further be configured to control operations of a heating tube and a fan of the air fryer in the present cooking process according to the target control parameter, and adjust a heating power of the heating tube and a wind speed of the fan according to a cooking progress such that the heating tube and the fan cooperate to operate.

In some embodiments, the determination unit 102 may further be configured to determine a temperature range of the target temperature from different temperature ranges.

The determination unit 102 may further be configured to query the preset temperature-control parameter mapping table, and determine operating durations respectively required for the heating tube and the fan to reach the target temperature according to the temperature range of the target temperature.

In some embodiments, the cooking progress includes a preheating stage, a constant-temperature stage, and a crisping stage. The control unit 103 may further be specifically configured to control, in the preheating stage, the DC motor to implement the soft start to slowly increase the wind speed of the fan, reduce heat loss of the air fryer in the preheating stage, and ensure full-power heating of the heating tube; compare, in the constant-temperature stage, a real-time temperature of the air fryer with the target temperature to adjust a duty cycle of the heating tube and control the fan to operate at a gear speed matched with the target cooking mode; and turn off, in the crisping stage, when a preset crisping temperature of a food material is reached, the heating tube, and maintain the fan to operate at the gear speed.

It is to be noted that other corresponding description on each functional unit involved in the noise reduction control apparatus for an air fryer according to the embodiment of the present disclosure may refer to corresponding description in FIG. 1, FIG. 3, and FIG. 5, and is not repeated herein.

Based on the method shown in FIG. 1, FIG. 3, and FIG. 5, an embodiment further provides a storage medium accordingly. The storage medium is configured to store a computer program. The computer program is executed by a processor to implement the noise reduction control method for an air fryer shown in FIG. 1, FIG. 3, and FIG. 5.

Based on this understanding, the technical solutions of the present disclosure may be implemented in a form of a software product. The software product may be stored in a non-volatile storage medium (which may be a compact disc read-only memory (CD-ROM), a USB flash disk, a removable hard disk, or the like), and includes a plurality of instructions to enable an electronic device (which may be a personal computer, a server, a network device, or the like) to perform the method in each embodiment of the present disclosure.

Based on the method shown in FIG. 1, FIG. 3, and FIG. 5, and the virtual apparatus embodiment shown in FIG. 6, in order to achieve the above purposes, an embodiment of the present disclosure further provides an air fryer, which may specifically be a personal computer, a tablet computer, a server, or other network devices. The device includes a storage medium and a processor. The storage medium is configured to store a computer program. The processor is configured to execute the computer program to implement the noise reduction control method for an air fryer shown in FIG. 1, FIG. 3, and FIG. 5.

Optionally, the physical device may further include a user interface, a network interface, a camera, a radio frequency (RF) circuit, a sensor, an audio circuit, a wireless fidelity (Wi-Fi) module, etc. The user interface may include a display, and an input unit such as a keyboard, and an optional user interface may further include a universal serial bus (USB) interface, a card reader interface, etc. The network interface may optionally include a standard wired interface, a wireless interface (such as a Wi-Fi interface), etc.

It can be understood by those skilled in the art that the structure of the physical device provided by the embodiment does not constitute a limitation to the physical device, and may include more or fewer components than those shown, or combine some components, or have different component arrangements.

The storage medium may further include an operating system and a network communication module. The operating system is a program for managing hardware and software resources of the physical device, and is configured to support an information processing program and operations of other software and/or programs. The network communication module is configured to realize communication between components in the storage medium, and communication between other hardware and software in a physical information processing device.

Through the description of the foregoing implementations, those skilled in the art can clearly understand that the present disclosure may be implemented by means of software plus a necessary universal hardware platform, and may also be implemented by means of hardware.

By employing the DC motor, the embodiment of the present disclosure can slowly increase the rotational speed of the motor when the air fryer is just started for cooking, such that noise of the motor in rotation becomes gradually loud, providing the user with a gradual adaptation process and thereby improving user experience. In addition, for a high target cooking rotational speed, when the air fryer is started, the present disclosure can reduce heat loss during the heating process by slowly increasing the rotational speed of the motor, thereby improving cooking efficiency.

Those skilled in the art should understand that the drawings are only schematic diagrams of a preferred embodiment, and the modules or processes in the drawings are not necessary for implementing the present disclosure. Those skilled in the art may understand that the modules of the apparatus in the embodiment may be distributed in the apparatus in the embodiment according to the description in the embodiment, or may also be changed accordingly and located in one or more apparatuses different from the embodiment. The modules in the above embodiment can be combined into one module, or further disassembled into a plurality of sub-modules.

The serial numbers of the present disclosure are merely for description and do not represent a preference of the embodiments. The above disclosed are merely several specific embodiments of the present disclosure, and the present disclosure is not limited thereto. Any changes that can be conceived by those skilled in the art should fall within the protection scope of the present disclosure.

## Claims

1. A noise reduction control method for an air fryer, wherein the air fryer comprises a direct current (DC) motor, and the method comprises:
acquiring a target cooking mode of the air fryer;
determining a target cooking rotational speed of the DC motor of the air fryer according to the target cooking mode; and
if the target cooking rotational speed is greater than a minimum rotational speed of the DC motor during a soft start, controlling the DC motor to implement the soft start to gradually reach the target cooking rotational speed.

2. The method according to claim 1, wherein the determining the target cooking rotational speed of the DC motor of the air fryer according to the target cooking mode comprises:
querying a preset cooking mode list, and determining the target cooking rotational speed of the DC motor according to the target cooking mode, wherein the preset cooking mode list records cooking rotational speeds of the DC motor in different cooking modes.

3. The method according to claim 1, further comprising:
if the target cooking rotational speed is less than or equal to the minimum rotational speed of the DC motor during the soft start, determining that the DC motor does not need to implement the soft start in a present cooking process; and
directly outputting a duty cycle corresponding to the target cooking rotational speed, and controlling the DC motor to reach the target cooking rotational speed.

4. The method according to claim 1, wherein the controlling the DC motor to implement the soft start to gradually reach the target cooking rotational speed comprises:
determining a duty cycle corresponding to the minimum rotational speed of the DC motor during the soft start as a duty cycle corresponding to an initial rotational speed, and calculating a difference between a duty cycle corresponding to the target cooking rotational speed and the duty cycle corresponding to the initial rotational speed; and
controlling the DC motor to implement the soft start based on the difference to gradually reach the target cooking rotational speed.

5. The method according to claim 4, wherein the controlling the DC motor to implement the soft start based on the difference to gradually reach the target cooking rotational speed comprises:
based on the difference and a soft start period, calculating an average duty cycle increment within the soft start period;
taking the duty cycle corresponding to the initial rotational speed as a present output duty cycle to control the DC motor to reach the initial rotational speed;
determining whether the present output duty cycle is equal to the duty cycle corresponding to the target cooking rotational speed; and
if the present output duty cycle is not equal to the duty cycle corresponding to the target cooking rotational speed, increasing the present output duty cycle according to the average duty cycle increment, and repeating steps of determining and increasing the present output duty cycle until the present output duty cycle is equal to the duty cycle corresponding to the target cooking rotational speed.

6. The method according to any one of claims 1 to 5, further comprising:
acquiring a target temperature of the air fryer;
querying a preset temperature-control parameter mapping table, and determining a target control parameter of the air fryer according to the target temperature; and
controlling operations of a heating tube and a fan of the air fryer in the present cooking process according to the target control parameter, and adjusting a heating power of the heating tube and a wind speed of the fan according to a cooking progress such that the heating tube and the fan cooperate to operate.

7. The method according to claim 6, wherein the target control parameter comprises operating durations respectively required for the heating tube and the fan to reach the target temperature; and the querying the preset temperature-control parameter mapping table, and determining the target control parameter of the air fryer according to the target temperature comprises:
determining a temperature range of the target temperature from different temperature ranges; and
querying the preset temperature-control parameter mapping table, and determining the operating durations respectively required for the heating tube and the fan to reach the target temperature according to the temperature range of the target temperature.

8. The method according to claim 6, wherein the cooking progress comprises a preheating stage, a constant-temperature stage, and a crisping stage; and the adjusting the heating power of the heating tube and the wind speed of the fan according to the cooking progress such that the heating tube and the fan cooperate to operate comprises:
in the preheating stage, controlling the DC motor to implement the soft start to slowly increase the wind speed of the fan and reduce heat loss of the air fryer in the preheating stage;
in the constant-temperature stage, comparing a real-time temperature of the air fryer with the target temperature to adjust a duty cycle of the heating tube and control the fan to operate at a gear speed matched with the target cooking mode; and
in the crisping stage, when a preset crisping temperature of a food material is reached, turning off the heating tube, and maintaining the fan to operate at the gear speed.

9. An air fryer, comprising: a storage medium, a processor, and a computer program stored in the storage medium and executable on the processor, wherein the processor is configured to execute the computer program to implement the method according to any one of claims 1 to 8.
